(19) Europäisches Patentamt

European Patent Office

Office européen des brevets

(11) **EP 2 191 322 B1**

(12) **FASCICULE DE BREVET EUROPEEN**

(45) Date de publication et mention
de la délivrance du brevet:
**15.08.2012 Bulletin 2012/33**

(51) Int Cl.:
**G02B 27/00** *(2006.01)* **G06T 5/00** *(2006.01)*
**G02B 27/42** *(2006.01)*

(21) Numéro de dépôt: **08826883.4**

(22) Date de dépôt: **07.07.2008**

(86) Numéro de dépôt international:
**PCT/FR2008/051265**

(87) Numéro de publication internationale:
**WO 2009/019362 (12.02.2009 Gazette 2009/07)**

(54) **Procédé d'accroissement de la profondeur de champ d'un système optique**

Verfahren zur Vergrösserung der Abbildungstiefe eines optischen Systems

Method of increasing the depth of field of an optical device

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **03.08.2007 FR 0756948**

(43) Date de publication de la demande:
**02.06.2010 Bulletin 2010/22**

(73) Titulaire: **DxO Labs**
**92100 Boulogne Billancourt (FR)**

(72) Inventeurs:
• **LIEGE, Bruno**
**92100 Boulogne Billancourt (FR)**
• **TESSIERES, Régis**
**75015 Paris (FR)**
• **GUICHARD, Frédéric**
**75012 Paris (FR)**
• **KNAUER, Etienne**
**92100 Boulogne Billancourt (FR)**
• **NGUYEN, Hoang-Phi**
**75013 Paris (FR)**

(74) Mandataire: **Beauvais, Emmanuelle**
**SCHMIT CRETIEN**
**Département BREVETS**
**16, rue de la Paix**
**75002 Paris (FR)**

(56) Documents cités:
**EP-A- 0 157 476** **FR-A- 2 880 958**
**US-A1- 2006 171 041**

## Description

La présente invention a pour objet un procédé d'accroissement de la profondeur de champ d'un système optique. Elle vise à augmenter la profondeur de champ d'un système optique au delà de ses limites classiques.

Selon des exemples non limitatifs, le système optique peut-être intégré à un système d'acquisition d'image qui peut être un appareil photo jetable, un appareil photo numérique, un appareil reflex (numérique ou non), un scanner, un fax, un endoscope, une caméra, un caméscope, une caméra de surveillance, un jouet, une caméra ou un appareil photo intégré ou relié à un téléphone, à un assistant personnel ou à un ordinateur, une caméra thermique, un appareil d'échographie, un appareil d'imagerie IRM (résonance magnétique), un appareil de radiographie à rayons X.

Un système d'acquisition d'images comporte généralement, outre un système optique dont le rôle est de focaliser la lumière, un capteur. Un tel capteur comprend des moyens mécaniques, chimiques, ou électroniques permettant la capture et/ou l'enregistrement d'images.

Le capteur est par exemple un système de cellules photosensibles qui transforme la quantité de lumière reçue en valeurs numériques, et qui attribue à chaque pixel la ou les valeurs qui lui correspondent. L'image brute directement acquise par le capteur est traditionnellement appelée image RAW. Le nombre de valeurs numériques finalement attribuées à chaque pixel dépend du système de prise de vue.

Dans une variante de réalisation, une valeur numérique est associée à une mesure par le capteur dans chaque bande spectrale telle que définie selon l'invention. Les valeurs numériques ainsi obtenues sont mémorisées à l'aide de moyens de mémorisation.

De préférence selon l'invention, des moyens de traitements connectés aux moyens de mémorisation effectuent un traitement des données mémorisées. Par moyens numériques de traitement d'images, on entend par exemple un logiciel et/ou un composant et/ou un équipement et/ou un système permettant de modifier la qualité de l'image.

Les moyens numériques de traitement d'images peuvent prendre diverses formes selon l'application.

Les moyens numériques de traitement d'images peuvent être intégrés, en tout ou partie, à l'appareil, comme dans les exemples suivants :

- Un appareil de capture d'images qui produit des images modifiées, par exemple un appareil photo numérique qui intègre des moyens de traitement d'images.
- Un appareil de capture d'image professionnel qui produit des images modifiées, par exemple un endoscope incluant des moyens de traitement d'images.

Les moyens numériques de traitement d'images peuvent être intégrés, en tout ou partie, à un ordinateur. Dans ce cas, en pratique les moyens de traitement d'images sont compatibles avec de multiples appareils.

Le système optique peut être à focale fixe ou variable, à ouverture fixe au variable, à mise au point fixe ou variable.

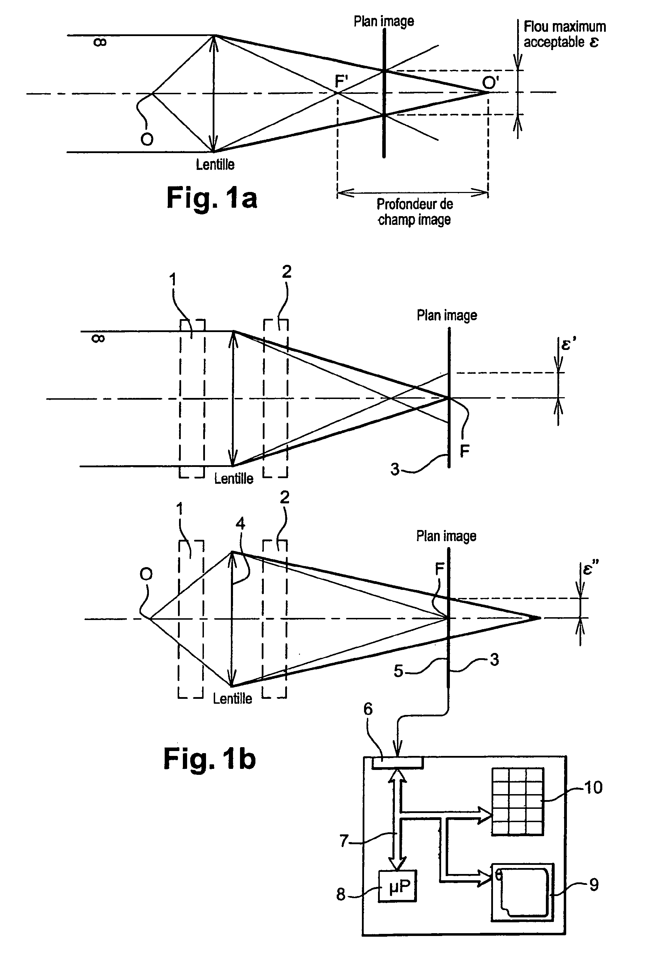

Dans le cas d'une optique classique à focale fixe, figure 1a, la profondeur de champ peut par exemple être déterminée par la taille maximale de la tache image polychromatique acceptable d'un point objet O dans le plan image. C'est notamment le cas dans le cadre de la photographie. Dans le cas d'une onde incidente monochromatique et d'une optique parfaite, cette taille maximale est représentée par le flou maximum acceptable, désigné par $\varepsilon$ dans la figure 1 a. Afin d'avoir une image nette à l'infini et à une distance la plus faible possible, il est nécessaire de placer le capteur d'images dans un plan image, à la position représentée dans la figure 1 a. Cette position correspond à l'intersection des rayons marginaux provenant d'une part de l'infini et d'autre part de la distance proche définie par le point objet O. A cette position privilégiée, la tache de flou pour un objet à l'infini est de dimension identique à celle obtenue pour un objet placé en O.

La profondeur de champ image correspond à une distance F'O' où F' est le foyer de la lentille et O' l'image de O par la lentille.

La profondeur de champ objet correspond à la distance entre les deux objets extrêmes, ici l'infini et O. Etant donné que, dans ce cas précis, l'infini sera net, il est généralement plus intéressant de regarder la distance minimum (objet placé en O) pour laquelle l'image sera nette. Plus la valeur $\varepsilon$ est faible, plus le point O doit être éloigné de la lentille, et moins la profondeur de champ objet est grande.

Une distance minimum $d_{minimum}$ pour une optique classique sans défaut est déterminée par la formule suivante dans le cadre d'un capteur d'images au format 4/3 :

$$d_{\text{minimum}} = \frac{1}{2} \cdot \left( \frac{25 \cdot NMpixels \cdot 10^6 \cdot P}{96 \cdot \sqrt{2} \cdot \tan^2\left(\frac{FOV}{2}\right) \cdot f/\#} + \frac{5 \cdot \sqrt{NMpixels \cdot 10^6 \cdot P}}{4\sqrt{3} \cdot \tan\left(\frac{FOV}{2}\right)} \right)$$

Où NMpixels correspond au nombre de millions de pixels du capteur d'images, P à la taille du pixel, FOV à l'angle de champ perçu par la lentille et f/# au nombre d'ouverture de la lentille.

En considérant les paramètres suivants : f/# = 2.8, FOV = 65°, NMpixels = 3 et P=2.8$\mu$m, la distance minimum sera égale à 56cm. Cette distance est à comparer aux 10cm atteignables avec la présente invention.

Le raisonnement précédent peut s'étendre au cas d'un zoom qui représente un système optique dont la focale est variable, voire à un système de projection d'image sur un écran, par exemple mural, l'écran jouant le rôle de plan image (ou jouant à l'inverse un rôle d'objet en considérant par convention une inversion du phénomène optique qui est réversible).

Par ailleurs, de nombreux appareils photographiques existants sont dotés d'une fonction dite d'Auto-Focus, qui correspond à une fonction de mise au point automatique. Cette fonction de mise au point se base sur une image d'une scène naturelle, en cherchant à obtenir la meilleure netteté possible pour cette image. Le principe de cette fonction est qu'elle cherche à se placer au point le plus net pour cette image là.

Dans l'état de la technique, notamment dans les dispositifs développés par la Société DXO LABS, cette profondeur de champ peut-être étendue grâce à l'utilisation de l'aberration chromatique longitudinale et au traitement ultérieur de l'image obtenue au moyen du capteur d'images comme décrit dans le document FR-A-2 880 958. En effet, une plage de netteté de profondeur de champ, celle dans laquelle la taille de la tache image est inférieure à un seuil prédéterminé, n'est pas la même selon la couleur, la composante chromatique du signal lumineux de l'objet à capter dans le plan image. On peut ainsi distinguer plusieurs plages de netteté, par exemple trois plages, selon des composantes spectrales considérées, par exemple rouge, verte et bleue. Il est alors possible de faire en sorte d'avoir au moins une couleur nette par plage de distances donnée et de transférer la netteté du canal le plus net vers les deux autres canaux couleurs.

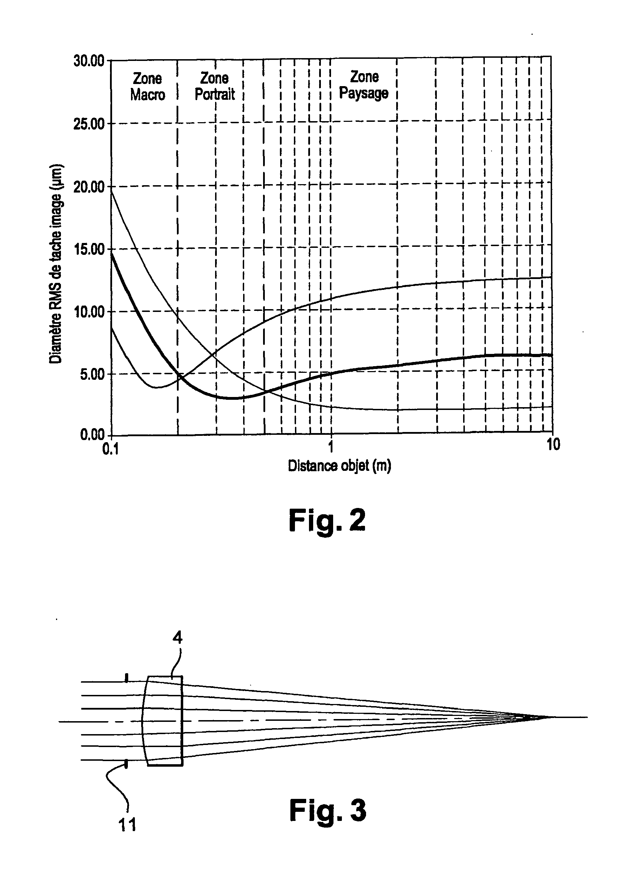

Dans l'exemple de la figure 2, la variance de la tache image, en ordonnée, est représentée d'une part en fonction de la distance objet, en abscisse et d'autre part en fonction de la composante spectrale. La courbe ayant la plus grande ordonnée à l'origine est la courbe de la composante spectrale rouge (longueurs d'ondes comprises entre 600nm et 700nm). La courbe intermédiaire est celle de la composante verte (longueurs d'ondes comprises entre 500nm et 600nm), la courbe ayant la plus faible ordonnée à l'origine est celle de la composante bleue (longueurs d'ondes comprises entre 400nm et 500nm). On peut alors découper les distances objets en trois zones. On peut définir une zone dite macro, pour des objets distants de 10cm à 20cm de l'optique, où le bleu sera plus net que le vert et le rouge. Une zone portrait entre 20cm et 50cm est celle où le vert sera plus net que le bleu et le rouge. Une zone paysage au delà de 50c est celle où le rouge sera plus net que le bleu et le vert. Il serait par ailleurs possible de définir plus (ou moins) de zones et plus (ou moins) de gammes de couleurs.

Sans traitement de l'image après sa capture, une telle optique donne une image floue à cause de l'aberration chromatique présente. Avec un traitement numérique qui permet d'effectuer un transport de netteté du canal le plus net vers les autres canaux, il est possible d'obtenir une image nette sur une grande plage de distances, en pratique de 10cm à l'infini.

L'aberration chromatique introduite dans le système optique est ainsi contrôlée afin d'obtenir la profondeur de champ souhaitée.

L'aberration chromatique présente dans le système étant connue, la correction numérique de l'image après sa capture est réalisée suivant différentes plages de distances. En effet, suivant la valeur de la tache image pour les trois canaux couleurs, la distance entre l'objet et la lentille est évaluée et la correction numérique de l'image est adaptée suivant la distance trouvée. Le traitement numérique de l'image est adaptatif suivant la distance objet et par conséquent il n'y a pas la nécessité d'avoir une tache image invariante suivant la distance objet.

De manière naturelle, quand on relâche les contraintes sur l'optique afin d'avoir de l'aberration chromatique longitudinale, on observe que le bleu est plus net en zone macro et que le rouge est plus net en zone paysage.

Cela résulte du fait que le bleu focalise de manière générale avant le rouge. En effet si on considère un système optique composé d'une lentille et d'un plan image fixe où sera placé le capteur d'images, quand l'objet est placé à l'infini c'est le rouge qui sera net et lorsque l'objet sera placé à distance fini, les rayons vont se décaler également vers la droite et ce sera le bleu qui sera le plus net. Cela est illustré sur la figure 1b, où pour la partie supérieure, les rayons rouges sont focalisés au foyer F, alors que les rayons bleus, qui se focalisent devant le foyer F, laissent apparaître une tache de hauteur $\varepsilon$' sur le plan image. Pour la partie basse, les rayons bleus issus d'un objet O sont focalisés en F alors que les rayons rouges laissent apparaître une tache de hauteur $\varepsilon$" sur le plan image.

Par bleu, on entend lumière incohérente composée de longueurs d'onde visibles courtes et, par rouge, on entend lumière incohérente composée de longueurs d'onde visibles longues.

On fait par ailleurs référence à la température de couleur qui permet de déterminer la couleur d'une source de lumière. Elle se mesure en kelvins. La couleur d'une source lumineuse est comparée à celle d'un corps noir théorique chauffé entre 2 000 K et 10 000 K, qui aurait dans le domaine de la lumière visible un spectre d'émission similaire à la couleur considérée.

La couleur apparente d'une source lumineuse varie du rouge orangé de la flamme d'une bougie, 1850 K, à bleuté dans le cas d'un flash électronique, entre 5000 et 6500 K selon les fabricants, bien que certaines de ces températures n'aient aucune relation avec la température du corps noir. La variation de couleur de la lumière dans une même journée n'est que difficilement reproductible par la lumière artificielle et souvent avec des appareils complexes et coûteux. Elle relativise la notion de normalité de la lumière naturelle.

Pour apprécier l'aspect et la qualité de la lumière il convient d'associer à la température de couleur un indice de rendu de couleur. On connaît par exemple les indices soleil à l'horizon 2000 K, lampe au sodium 2200 K, lampe à incandescence de 2400 K à 2700 K, lampe fluorescente blanc chaud de 2700 K à 3000 K, lampes aux halogénures métalliques de 3000 K à 4200 K, lampe halogène de 3000 K à 3200 K, lampe fluorescente blanc neutre de 3900 K à 4200 K, soleil au zénith 5800 K, lampe fluorescente lumière du jour 5400 K à 6100 K, lumière naturelle normée 5000 K, dite D50, ou 6500 K, dite D65.

La raison pour laquelle de manière naturelle le bleu focalise avant le rouge, vient du fait que pour une lentille simple la focale est inversement proportionnelle à l'indice de réfraction du matériau utilisé pour cette lentille et que par ailleurs l'indice de réfraction diminue lorsque la longueur d'onde augmente. Par conséquent si on considère deux longueurs d'onde telles que $\lambda_1 > \lambda_2$, les focales pour ces deux longueurs d'onde seront telles que $f_{\lambda 1} > f_{\lambda 2}$. Cela revient à dire que plus la longueur d'onde est élevé plus les rayons focaliseront loin de la lentille.

Seulement ce comportement naturel ne favorise pas les performances optiques dans le cas d'une lentille non corrigée du chromatisme longitudinal à cause des conditions d'utilisation.

Par exemple pour un appareil photo, l'utilisation normale est de prendre des photographies à grandes distances (typiquement supérieures à 10m) en extérieur et des photographies en proche en intérieur. Or, l'illuminant en extérieur, au sens extérieur d'un immeuble, est proche du D65 qui est plutôt bleu (longueurs d'onde courtes) et l'illuminant en intérieur est plutôt de type A, source tungstène équivalent à un corps noir à 2856K selon la norme CIE. Cette source est plutôt rouge. Donc cela n'est pas favorable étant donné que le bleu est normalement plus net en proche qu'à l'infini.

La présente invention a pour objet d'augmenter la qualité image d'un système optique non préalablement corrigé du chromatisme longitudinal pour des conditions d'utilisation normales. Ce problème d'augmentation est résolu en prenant pour principe d'inverser le chromatisme de ce système optique comportant un chromatisme longitudinal non corrigé. En agissant ainsi on obtient une bonne qualité image suivant des conditions normales d'utilisation. Par conditions normales d'utilisation, on entend prises de vues à l'infini ou à des distances éloignées en extérieur avec un éclairement extérieur, de type D65 par exemple, et prises de vues en proche à l'intérieur, avec un éclairement intérieur, de type A par exemple.

La profondeur de champ par rapport au système d'origine est ainsi étendue en tenant compte des conditions d'utilisation car la tache image sera plus faible en proche et à l'infini.

L'inversion de chromatisme de l'invention se produit dans le domaine optique, de préférence, mais pas nécessairement, sans corriger optiquement ce chromatisme. De cette manière on peut ensuite corriger la netteté de l'image acquise par un traitement informatique du signal d'image résultant de sa détection. Ce traitement, du type de celui décrit dans le document FR-A-2 880 958, utilise l'aberration chromatique restante. Cependant, avec l'invention il est tout aussi possible d'inverser le chromatisme seulement, ou d'inverser le chromatisme, de corriger en partie dans le domaine de l'optique l'aberration chromatique et de corriger par traitement d'image informatique le signal image une fois détecté, voire un panachage de ces différentes techniques.

Pour réaliser l'inversion de chromatisme, il est possible de le faire de manière réfractive ou diffractive, ou en utilisant les deux conjointement. En pratique on interpose un objet inverseur de chromatisme entre l'objet à imager et un dispositif de capture d'image.

Un objet diffractif permet de réaliser l'inversion de chromatisme de manière plus aisée car il possède un chromatisme longitudinal négatif. Les rayons composés de longueurs d'onde longues focalisent avant les rayons qui sont composés de longueurs plus courtes.

L'invention a donc pour objet un procédé d'accroissement de la profondeur de champ d'un système optique pour des conditions d'utilisation normales, c'est-à-dire pour des prises de vues à l'infini ou à des distances éloignées en extérieur avec un éclairement extérieur, de type D65 par exemple, et pour des prises de vues en proche à l'intérieur, avec un éclairement intérieur, de type A par exemple,

- qui traite une lumière incohérente,
- cette lumière incohérente étant répartie sur au moins deux bandes spectrales, une première bande pour les longueurs

**4**

d'onde longues et une deuxième bande pour les longueurs d'onde courtes,

- une valeur de longueur d'onde centrale de la première bande étant supérieure à une valeur de longueur d'onde centrale de la deuxième bande,
- qui possède une fonction de transfert optique,
- qui possède une lentille de focalisation de la lumière incohérente reçue en provenance d'un objet sur un plan image,
- qui possède des moyens de mémorisation pour mémoriser une représentation des images de lumière dues à ces bandes spectrales et qui sont reçues dans le plan image,

caractérisé en ce qu'il comporte

- un élément optique interposé entre l'objet et le plan image,
- cet élément optique possédant une fonction d'inversion longitudinale chromatique, de façon à ce que la focale pour le bleu soit supérieure à la focale pour le rouge,
- cette fonction d'inversion ayant pour effet de modifier la fonction de transfert optique du système de telle façon que
- pour un objet placé dans une première gamme de distances par rapport à la lentille, et pour un éclairement extérieur,
- cette valeur de la fonction de transfert est plus élevée dans les deux bandes de fréquence que si cet élément optique n'était pas interposé.
  De préférence, à titre de perfectionnement ce système comporte
- des moyens de traitement connectés aux moyens de mémorisation pour restaurer la représentation de l'image de lumière reçue dans le plan image qui filtrent l'image pour affecter à une bande de fréquence une netteté mesurée dans une autre bande de fréquence.
  A titre de perfectionnement, cette fonction d'inversion a pour effet de modifier la fonction de transfert optique du système de telle façon que
- pour un objet placé dans une deuxième gamme de distances par rapport à la lentille, et pour un éclairement intérieur, cette valeur de la fonction de transfert est plus élevée dans les deux bandes de fréquence que si cet élément optique n'était pas interposé.

Dans un exemple, le capteur d'image est un capteur capable de mesurer et de différencier des signaux lumineux produits dans deux bandes de couleur différentes, l'une correspondant par exemple à un éclairement de type A, l'autre à un éclairement de type D65.

L'invention sera mieux comprise à la lecture de la description qui suit et à l'examen des figures qui l'accompagnent. Celles-ci ne sont présentées qu'à titre indicatif et nullement limitatif de l'invention. Les figures montrent:

- figures 1a et 1b : déjà en partie commentées, des schémas de principe permettant la compréhension de l'invention, figure 1b, en haut, pour le cas d'un objet à l'infini et, en bas, pour un objet à distance finie;
- figure 2 : déjà commentée, une représentation de la variance de la tache image en fonction de la distance objet pour trois canaux rouge, vert, et bleu;

- figure 3 : une lentille sphérique, par exemple en NBK7 de chez Schott, avec diaphragme avant;
- figure 4 : une représentation de la variance de la tache image en fonction de la position de l'objet par rapport au système optique en considérant un illuminant A (Tungstène) pour le système optique représenté figure 3;
- figure 5 : une représentation de la fonction de transfert de modulation du système optique, FTM, en fonction de la position de l'objet par rapport au système optique en considérant un illuminant A (Tungstène) pour le système optique représenté figure 3;
- figure 6 : une représentation de la variance de la tache image en fonction de la position de l'objet en considérant un illuminant D65 pour le système optique représenté figure 3;
- figure 7 : une représentation de la FTM en fonction de la position de l'objet en considérant un illuminant D65 pour le système optique représenté figure 3;
- figures 8 et 9 : des représentations homologues aux figures 5 et 7 avec interposition de l'objet diffractif inverseur de chromatisme selon l'invention;
- figure 10 : une différence de marche introduite par un objet inverseur;
- figures 11 et 12 : des vues de face et en coupe d'un exemple de réalisation d'un objet inverseur diffractif;
- figure 13 : un exemple d'un objet réfractif inverseur selon l'invention.
- figures 14 et 15 : des représentations homologues aux figures 5 et 7 avec interposition de l'objet réfractif inverseur de chromatisme selon l'invention.

Afin d'illustrer la présente invention, un système optique simple est considéré ici. La figure 1b montre ainsi un objet inverseur 1 ou 2, interposé entre l'objet O à imager et un plan 3 image. Il serait envisageable de disposer deux objets inverseurs 1 et 2. De préférence, une lentille 4 formant la face d'entrée du système optique étant scellée sur un boîtier de ce système, l'objet inverseur est placé en aval, position de l'objet 2, entre le plan 3 et la lentille 4. Un capteur 5 d'image du système optique est placé à l'endroit du plan 3. Le capteur 5, et plus généralement des moyens de mémorisation, peuvent comporter un dispositif 5 à transfert de charge, ou un film, ou une caméra vidéo. Le capteur 5 est relié à un dispositif de traitement comportant, d'une manière schématiquement représentée, une interface 6 reliée par un bus d'adresses, de données et de commandes 7, à un microprocesseur 8, à une mémoire de données 9, et à une mémoire programme 10. Un programme mémorisé dans la mémoire 9 peut comporter un filtre numérique de traitement.

Ce système optique, figure 3, est essentiellement composé d'un diaphragme 11, dans un exemple de 8.1 mm de diamètre et d'une lentille 4, dans cet exemple en NBK7, verre de chez Schott, de 4mm d'épaisseur et de 10mm de diamètre. La distance, dans cet exemple, entre le diaphragme et la lentille est de 1.72mm. Dans cet exemple, le rayon de courbure de la face avant de la lentille est de 23.58mm et le rayon de courbure de la face arrière de la lentille est de -157.82mm. La fonction de transfert optique de ce système est reliée à la tache image introduite précédemment en réalisant une transformée de Fourier de cette tache image et en ne considérant que le module.

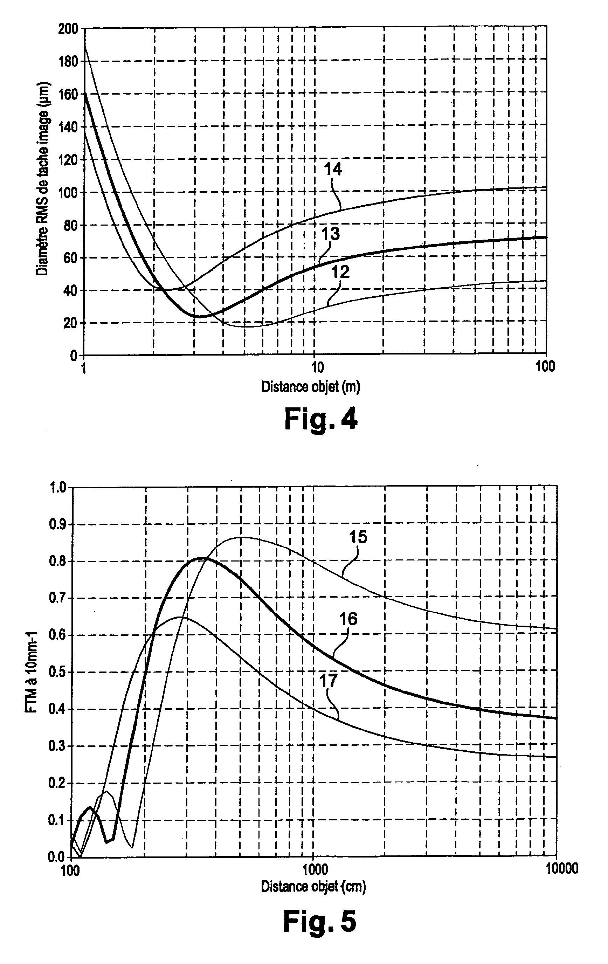

Lorsque cette lentille est utilisée avec un illuminant A (Tungstène), la variance de la tache image en fonction de la distance objet varie comme cela est montré dans la figure 4. Sur cette figure 4, la courbe 12 avec la plus grande ordonnée à l'origine représente la composante spectrale rouge. La courbe 13 avec l'ordonnée à l'origine intermédiaire représente la composante spectrale verte. La courbe 14 avec la plus faible ordonnée à l'origine représente la composante spectrale bleue. L'évolution correspondante de la FTM est montrée sur la figure 5 par les courbes respectivement 15 à 17.

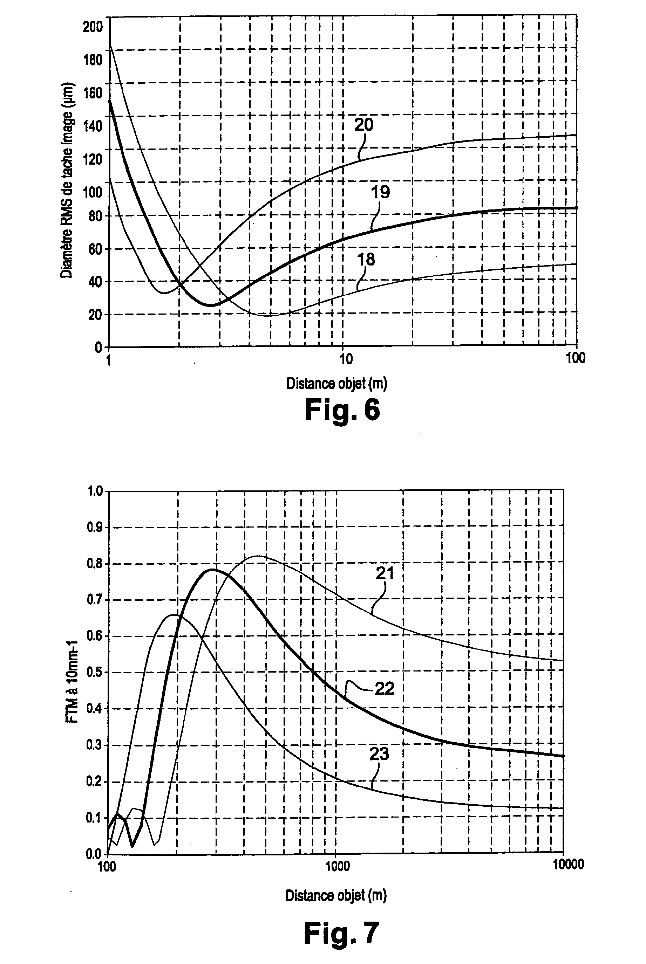

Lorsque l'illuminant est du D65, l'évolution de la variance de tache image, et la FTM, en fonction de la distance objet sont modifiés comme cela est montré respectivement par les courbes 18 à 20 et 21 à 23, toujours dans l'ordre rouge vert bleu, sur les figures 6 et 7.

Le fait de passer d'un illuminant A, figures 4 et 5, à un illuminant D65, figures 6 et 7, a pour conséquence d'avoir une meilleure qualité image en zone proche. Typiquement sur les courbes, pour les distance inférieures à 2m, le diamètre de tache est plus faible et la FTM est plus haute. Par contre ce passage produit une moins bonne qualité, diamètre de tache plus élevé et FTM plus basse, vers l'infini, typiquement au delà de 5m. On peut le voir de manière quantitative dans le Tableau 1 ci-après tiré des figures 4 à 7, où la qualité image est meilleure à 2 mètres et moins bonne à 100 mètres quand on passe d'un illuminant A à un illuminant D65:

Tableau 1 : Valeurs de la variance de la tache image et des FTM à 2m et 100m pour le rouge et le bleu en A et en D65.

|  |  | Objet à 2m | | Objet à 100m | |
|---|---|---|---|---|---|
|  |  | Bleu | Rouge | Bleu | Rouge |
| A | Variance de tache image ($\mu$m) | 42 | 72 | 102 | 44 |
|  | FTM à 10lp/mm | 0.56 | 0.18 | 0.27 | 0.61 |
| D65 | Variance de tache image ($\mu$m) | 36 | 68 | 128 | 48 |
|  | FTM à 10lp/mm | 0.66 | 0.27 | 0.12 | 0.53 |

L'intérêt de la présente invention est d'avoir l'effet inverse grâce à une inversion du chromatisme du système optique. Cet effet est produit alors que l'éclairement change. Typiquement le changement proposé revient à passer d'un éclairement A, correspondant à un éclairage intérieur, à un éclairement D65 correspondant à l'éclairement dû à la lumière du jour.

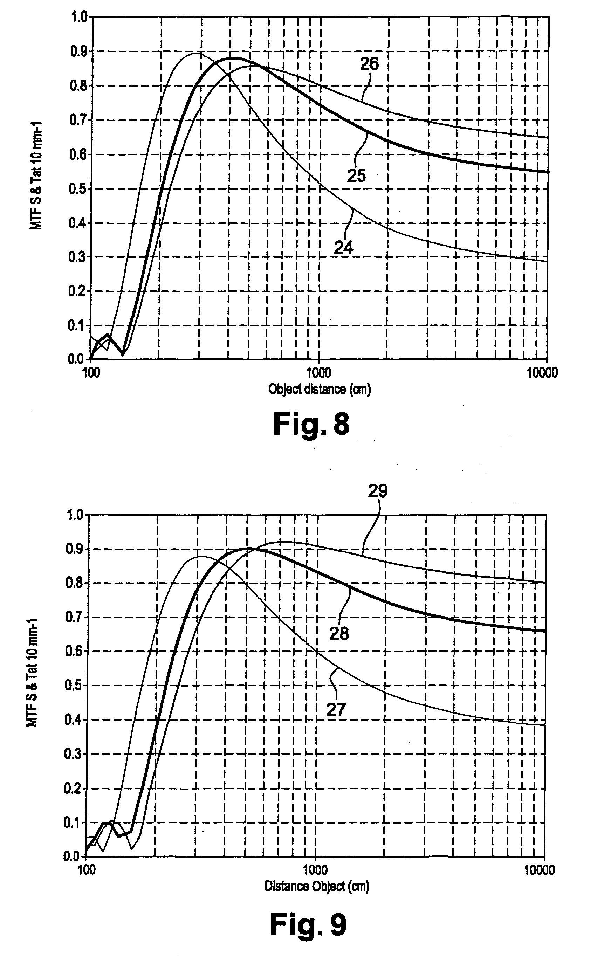

Les figures 8 et 9 montrent, en comparaison, un exemple avec un objet diffractif 1 interposé avant la lentille 4 au niveau du diaphragme. On obtient bien l'effet d'inversion de chromatisme attendu. Le rouge est plus net que le bleu en proche et le bleu est plus net que le rouge pour des distances éloignées.

Cet objet diffractif 1 a été calculé en introduisant une lame plane et parallèle dont la face arrière est diffractive au niveau du diaphragme. Cette surface diffractive est calculée au moyen d'un logiciel de tracé de rayons de type Code V, produit par la Société Optical Research Associates, aux Etats-Unis d'Amérique, Zemax, produit par la Société ZEMAX Development Corporation , aux Etats-Unis d'Amérique, OSLO, logiciel gratuit disponible sur Internet par Interstar.net ou autres, en optimisant celle-ci et en fixant pour contrainte, d'avoir la focale du bleu supérieure à la focale du rouge. Cette méthode consistant à optimiser une surface au moyen d'un logiciel de tracé de rayons en fixant des contraintes particulières est bien connue de l'homme de l'art.

Dans un autre exemple de réalisation, il est envisageable de placer l'objet diffractif dans un plan différent du diaphragme.

Dans le cadre où un traitement, du type de celui décrit dans le document FR-A-2 880 958, serait utilisé afin d'augmenter la profondeur de champ, il est possible de fixer un écart prédéterminé entre les focales rouge et bleu afin d'obtenir un chromatisme connu et contrôlé.

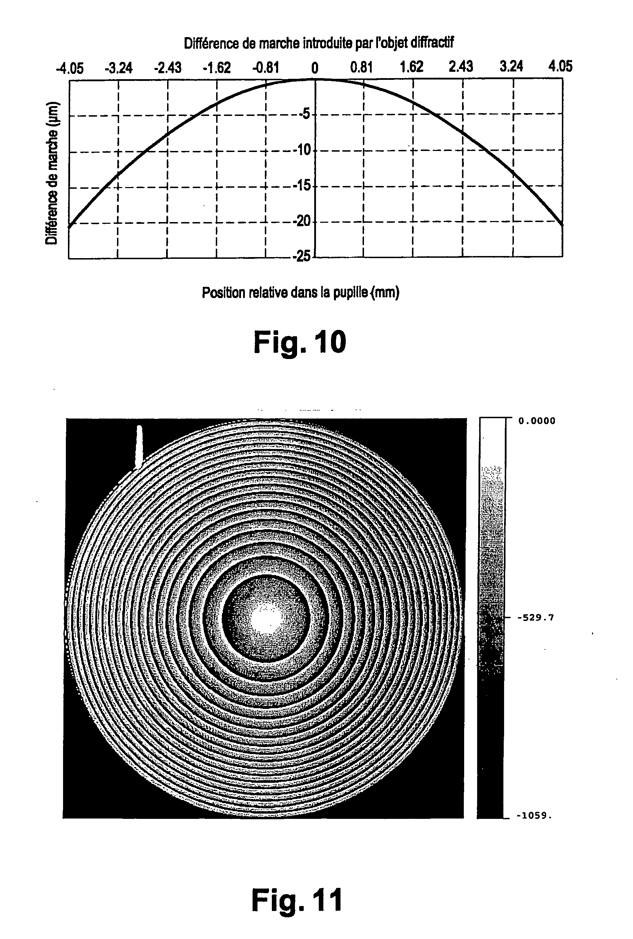

L'objet diffractif 1 introduit une différence de marche comme cela est illustré sur la figure 10.

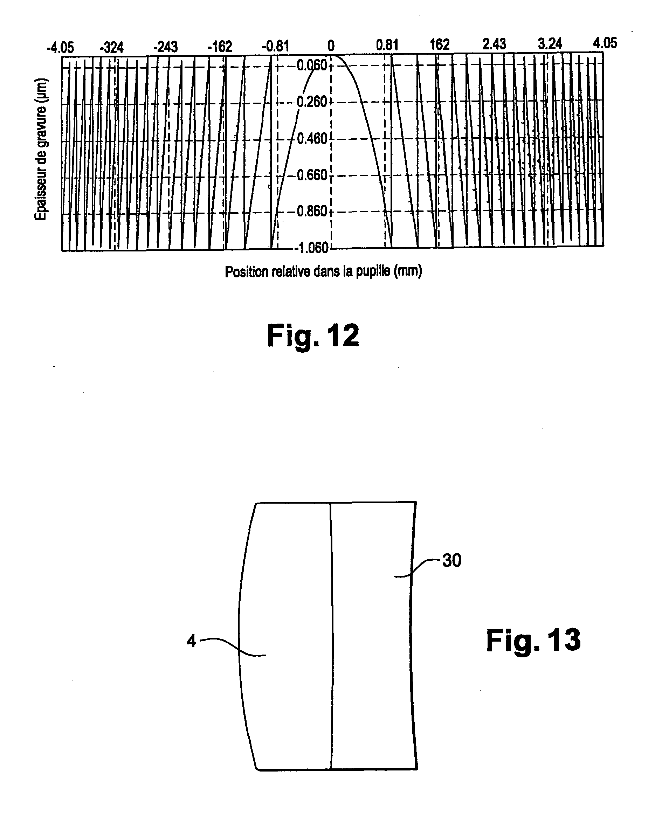

Cet objet 1 peut être réalisé sous la forme d'un réseau diffractif de pas variable comme cela est représenté vue de face sur la figure 11 et en vue en coupe diamétrale dans la figure 12. Cette figure 12 correspond à un réseau blazé, c'est-à-dire que l'efficacité de diffraction sera de 100% pour l'ordre de diffraction pour lequel l'objet diffractif aura été blazé. Ensuite, il est bien connu que pour fabriquer un tel élément optique, il est possible de le réaliser avec une précision plus au moins importante qui va jouer sur l'efficacité de diffraction. Plus le nombre de niveaux utilisés pour réaliser cet élément sera grand, plus l'objet va se rapprocher d'un réseau blazé et l'efficacité se rapprochera de 100%. Un réseau blazé (de l'anglais blaze = éclat) est un réseau échelette.

Le fait de passer d'un éclairement A, figure 8, à un éclairement D65, figure 9, améliore la qualité image à l'infini, dans les deux gammes de couleurs, et la diminue en zone proche. Cette inversion est due aux propriétés diffractives spécifiques de l'objet 1 (ou 2). De même, le fait de passer d'un éclairement D65, figure 9, à un éclairement A, figure 8, améliore la qualité image en zone proche, dans les deux gammes de couleurs, et la diminue à l'infini.

On peut le voir de manière quantitative dans le Tableau 2 où la qualité image est meilleure, dans les deux gammes de couleurs, à 100 mètres et moins bonne à 2 mètres quand on passe d'un illuminant A à un illuminant D65. En effet les FTM dans le bleu et dans le rouge passent maintenant respectivement de 0,37 à 0,22 et de 0,75 à 0,66 en zone proche et de 0,65 à 0,80 et de 0,29 à 0,38 en zone éloignée. Et réciproquement elle devient meilleure en zone proche lorsqu'on passe d'un éclairement D65; extérieur, à un éclairement A, intérieur:

Tableau 2 : Valeurs des FTM à 2m et 100m pour le rouge et le bleu en A et D65.

|  |  | Objet à 2m | | Objet à 100m | |
|---|---|---|---|---|---|
|  |  | Bleu | Rouge | Bleu | Rouge |
| A | FTM à 10lp/mm | 0.37 | 0.75 | 0.65 | 0.29 |
| D65 | FTM à 10lp/mm | 0.22 | 0.66 | 0.80 | 0.38 |

Sur le plan pratique, l'élément optique 1 ou 2 est situé de préférence à l'endroit d'un plan principal du système optique, entre l'objet et les moyens de mémorisation. Ou bien cet élément optique est situé à l'endroit d'un plan image d'un plan principal du système optique, entre l'objet et les moyens de mémorisation.

Par ailleurs, l'élément diffractif peut être placé directement sur la lentille 4. Elle est couramment appelée par l'homme de l'art, lentille hybride, car elle est à la fois réfractive et diffractive.

La présente invention peut-être étendue au cas où l'objet inverseur 1 ou 2 et la lentille 4 sont optimisés conjointement.

Par ailleurs les moyens de mémorisation comportent un dispositif à transfert de charge, ou un film, ou une caméra vidéo. Enfin, les moyens de post traitement comportent un filtre numérique mis en oeuvre par le microprocesseur 8 à l'aide d'un logiciel contenu dans la mémoire 9.

Les figures suivantes 13 à 15 montrent un exemple avec un objet réfractif interposé après la lentille 4 afin de former un doublet. Ce doublet est formé, figure 13, de la lentille principale 4 précédente et d'une lentille 30 de 10mm de diamètre dont la face avant possède un rayon de courbure de - 157.82mm identique à la face arrière de la lentille 4 et un rayon de courbure pour la face arrière de 78.88mm. Cette lentille 30 est par exemple en verre SF4 de chez Schott. On obtient bien l'effet d'inversion de chromatisme attendu. Le rouge est plus net que le bleu en proche et le bleu est plus net que le rouge pour des distances éloignées.

Cette lentille 30 a été obtenue en utilisant la même technique que celle employée dans le cadre de l'objet diffractif, à savoir l'utilisation d'un logiciel de tracé de rayons de type Code V, Zemax, OSLO... pour optimiser le rayon de courbure de la face arrière de la lentille 30 afin que la focale pour le bleu du système complet soit supérieure à la focale du rouge. Le rayon de courbure de la face avant de la lentille 30 n'ayant pas besoin d'être calculé puisque dans cet exemple on considère un doublet et par conséquent ce rayon de courbure correspond en valeur absolue à celui de la face arrière de la lentille 4.

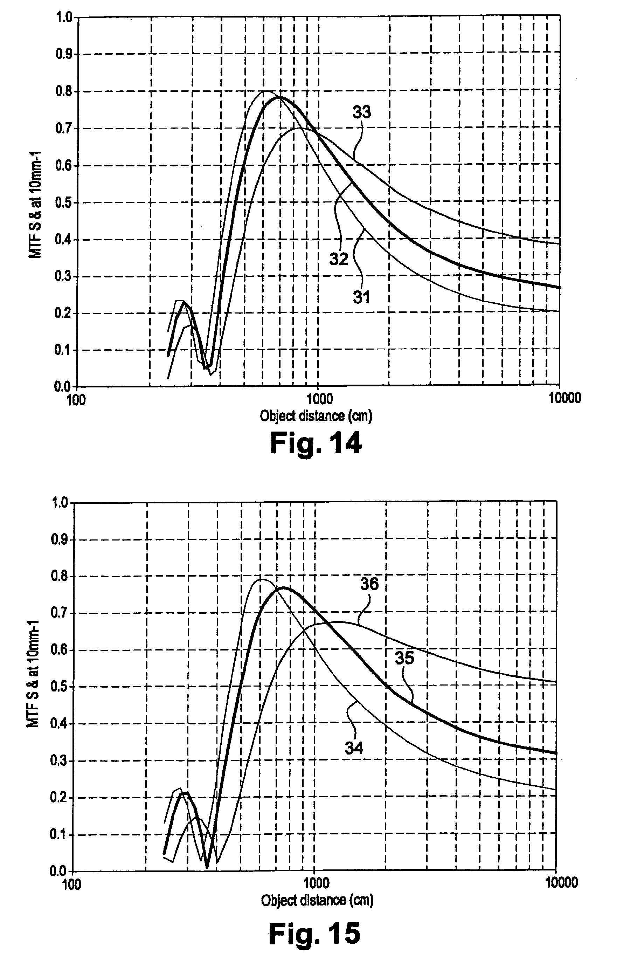

Avec ce doublet 4, 30, le fait de passer d'un éclairement A, figure 14, à un éclairement D65, figure 15, améliore la qualité image à l'infini, dans les deux gammes de couleurs, et la diminue en zone proche. Les courbes 31 à 33 et 34 à 36, respectivement des composantes spectrales rouges vertes et bleues, y montrent que le fait de passer d'un éclairement D65, à un éclairement A, améliore la qualité image en zone proche, dans les deux gammes de couleurs, et la diminue à l'infini.

On peut le voir de manière quantitative dans le Tableau 3 ci-après où la qualité image est meilleure, dans les deux gammes de couleurs, à 100 mètres et moins bonne à 4 mètres quand on passe d'un illuminant A à un illuminant D65. En effet les FTM dans le bleu et dans le rouge passent maintenant respectivement de 0,12 à 0,03 et de 0,41 à 0,36 en zone proche et de 0,39 à 0,51 et de 0,20 à 0,23 en zone éloignée. Et réciproquement elle devient meilleure en zone proche lorsqu'on passe d'un éclairement D65, extérieur, à un éclairement A, intérieur:

Tableau 3 : Valeurs des FTM à 4m et 100m pour le rouge et le bleu en A et D65 dans le cas du doublet.

|  |  | Objet à 4m | | Objet à 100m | |
|---|---|---|---|---|---|
|  |  | Bleu | Rouge | Bleu | Rouge |
| A | FTM à 10lp/mm | 0.12 | 0.41 | 0.39 | 0.20 |
| D65 | FTM à 10lp/mm | 0.03 | 0.36 | 0.51 | 0.23 |

Les FTM obtenues avec ce doublet 4, 30 sont assez basses mais ce doublet représente un cas simple afin d'illustrer le principe de la présente invention. On peut étendre le principe en utilisant plusieurs lentilles réfractives en verre, en plastique ou dans tout autre matériau réfractant la lumière. Ces lentilles peuvent être séparées les unes des autres, en cascade, par des espaces d'air.

La présente invention peut également s'étendre au cas des objets inverseurs diffractifs et réfractifs, communément appelés par l'homme de l'art, lentille hybride.

Ces objets inverseurs pouvant être obtenus par l'homme de l'art comme cela est expliqué précédemment au moyen d'un logiciel de tracé de rayons.

## Revendications

**1.** Procédé d'accroissement de la profondeur de champ d'un système optique dans le cas de prises de vues en extérieur avec un éclairement extérieur et de prises de vues en intérieur avec un éclairement intérieur, ledit système optique

- traitant une lumière incohérente répartie sur au moins deux bandes spectrales, une première bande pour les longueurs d'onde longues et une deuxième bande pour les longueurs d'onde courtes, une valeur de longueur d'onde centrale de la première bande étant supérieure à une valeur de longueur d'onde centrale de la deuxième bande,
- possédant une fonction de transfert optique,
- possédant une lentille de focalisation de la lumière incohérente reçue en provenance d'un objet sur un plan image,
- possédant des moyens de mémorisation pour mémoriser une représentation des images de lumière dues à ces bandes spectrales et qui sont reçues dans le plan image,

ledit procédé étant **caractérisé en ce que** l'on interpose un élément optique entre l'objet et le plan image,

- cet élément optique possédant une fonction d'inversion longitudinale chromatique, de façon à ce que la focale pour le bleu soit supérieure à la focale pour le rouge,
- cette fonction d'inversion ayant pour effet de modifier la fonction de transfert optique du système de telle façon que
- pour un objet placé dans une première gamme de distances par rapport à la lentille, et pour un éclairement extérieur,
- cette valeur de la fonction de transfert est plus élevée dans les deux bandes de fréquence que si cet élément optique n'était pas interposé.

**2.** Procédé selon la revendication 1, pour des prises de vues à des distances supérieures à 10 m en extérieur avec un éclairement extérieur et à des prises de vues plus proches à l'intérieur, avec un éclairement intérieur.

**3.** Procédé selon la revendication 1 ou 2, dans des conditions d'utilisation correspondant à des prises de vues en extérieur avec un éclairement de type D65, et/ou à des prises de vues à l'intérieur avec un éclairement de type A.

**4.** Procédé selon l'une quelconque des revendications 1 à 3, selon lequel on connecte des moyens de traitement aux moyens de mémorisation pour restaurer la représentation de l'image de lumière reçue dans le plan image qui filtrent l'image pour affecter à une bande spectrale une netteté mesurée dans une autre bande spectrale.

**5.** Procédé selon l'une des revendications 1 à 4, **caractérisé en ce que**

- pour un objet placé dans une deuxième gamme de distances par rapport à la lentille, et pour un éclairement intérieur, cette valeur de la fonction de transfert est plus élevée dans les deux bandes spectrales que si cet élément optique n'était pas interposé.

**6.** Procédé selon l'une des revendications 1 à 5, **caractérisé en ce que**

- l'élément optique est un masque diffractif, ou réfractif ou hybride.

**7.** Procédé selon l'une des revendications 1 à 6, **caractérisé en ce que**

- l'élément optique est situé à l'endroit d'un plan principal du système optique, entre l'objet et les moyens de mémorisation.

**8.** Procédé selon l'une des revendications 1 à 7, **caractérisé en ce que**

- l'élément optique est formé d'un doublet avec la lentille ou par plusieurs lentilles réfractives, en verre ou en plastique ou un en matériau réfractant la lumière.

**9.** Procédé selon l'une des revendications 1 à 8, **caractérisé en ce que**

- l'élément optique est situé à l'endroit d'un plan image d'un plan principal du système optique, entre l'objet et les moyens de mémorisation.

**10.** Procédé selon l'une des revendications 1 à 9, **caractérisé en ce que**

- les moyens de mémorisation comportent un dispositif à transfert de charge, ou un film, ou une caméra vidéo.

**11.** Procédé selon l'une des revendications 1 à 10, **caractérisé en ce que**

- les moyens de traitement comportent un filtre numérique.

**12.** Procédé selon l'une des revendications 1 à 11, **caractérisé en ce que** la focale pour les longueurs d'onde courtes du système complet est supérieure à la focale pour les longueurs d'onde longues.


**Claims**

**1.** Method for increasing the depth of field of an optical system for shots taken outdoors with an outdoor lighting and shots taken indoors with an indoor lighting,
said optical system

- processing incoherent light divided into at least two spectral bands, a first spectral band for long wavelengths and a second spectral band for short wavelengths, a center wavelength value of the first spectral band being higher than a center wavelength value of the second spectral band,
- having an optical transfer function,
- having a lens to focus incoherent light received from an object on an image plane,
- having storage means for storing a representation of the light images due to said at least two spectral bands, and that are received in the image plane,

said method being **characterized in that** an optical element is inserted between the object and the image plane,

- this optical element having a longitudinal chromatic inversion function, such that the focal distance for the blue is greater than the focal distance for the red,
- this inversion function having the effect of modifying the optical transfer function of the system such that
- for an object placed in a first distance range relative to the lens, and for an outdoor lighting,
- this value of the transfer function is higher in both frequency bands than without the optical element inserted.

2. Method according to claim 1, for shots taken at distances greater than 10 meters outdoor with an outdoor lighting, and for shots taken up closer indoor with an indoor lighting.

3. Method according to claim 1 or 2, for use conditions corresponding to shots taken outdoor with D65 type lighting, and/or shots taken indoor with A type lighting.

4. Method according to any one of claims 1 to 3, according to which processing means are connected to the storage means for storing a representation of the light images received in the image plane, that filter the image to provide a sharpness to a spectral band as measured in another spectral band.

5. Method according to any of claims 1 to 4, **characterized in that**

   - for an object placed in a second distance range relative to the lens and for indoor lighting, the value of the transfer function is higher in both spectral bands than without the optical element inserted.

6. Method according to any of claims 1 to 5, **characterized in that**

   - the optical element is a diffractive, refractive or hybrid mask.

7. Method according to any of claims 1 to 6, **characterized in that**

   - the optical element is placed in a location of a main plane of the optical system, between the object and the storage means.

8. Method according to any of claims 1 to 7, **characterized in that**

   - the optical element is formed of a doublet with the lens, or by several refractive lenses, made of glass or of plastic or of a light-refractive material.

9. Method according to any of claims 1 to 8, **characterized in that**

   - the optical element is placed in a location of an image plane of a main plane of the optical system, between the object and the storage means.

10. Method according to any of claims 1 to 9, **characterized in that**

    - the storage means comprise a charge transfer device, or a film, or a video camera.

11. Method according to any of claims 1 to 10, **characterized in that**

    - the processing means comprise a digital filter.

12. Method according to any of claims 1 to 11, **characterized in that** the focal distance for short wavelengths in the full system is greater than the focal distance for long wavelengths.

**Patentansprüche**

1. Verfahren zum Steigern der Feldtiefe eines optischen Systems im Falle von Außenaufnahmen mit einer äußeren Beleuchtungsstärke und von Innenaufnahmen mit einer inneren Beleuchtungsstärke, wobei das besagte optische System

   - ein inkohärentes Licht behandelt, das auf zumindest zwei Spektralbänder, nämlich ein erstes für die langen, und ein zweites für die kurzen Wellenlängen, verteilt ist, wobei ein zentraler Wellenlängenwert des ersten Bandes größer ist, als ein zentraler Wellenlängenwert des zweiten Bandes,
- eine optische Transferfunktion umfasst,
- eine Linse zum Bündeln des inkohärenten Lichtes umfasst, das von einem Gegenstand kommend auf einer Bildebene empfangen wird,
- Speichervorrichtungen zum Speichern einer Darstellung der Lichtbilder umfasst, die auf diese Spektralbänder zurückzuführen sind, und die auf der Bildebene empfangen werden,

wobei das besagte Verfahren **dadurch gekennzeichnet ist, dass** man ein optisches Element zwischen den Gegenstand und die Bildebene setzt,

- wobei dieses optische Element eine Funktion der farblichen Längsumkehrung umfasst, sodass die Brennweite für Blau größer ist, als die Brennweite für Rot,
- wobei die Auswirkung dieser Umkehrfunktion jene ist, die Funktion des optischen Transfers des Systems so zu verändern, dass
- bei einem Gegenstand, der in einem ersten Abstandsbereich im Verhältnis zur Linse und mit einer äußeren Beleuchtungsstärke aufgestellt ist,
- dieser Wert der Transferfunktion in den beiden Frequenzbändern höher ist, als jener, wenn dieses optische Element nicht dazwischengesetzt worden wäre.

2. Verfahren nach Anspruch 1, für Außenaufnahmen in einem Abstand von über 10 Metern und mit einer äußeren Beleuchtungsstärke und für näher gelegene Innenaufnahmen mit einer inneren Beleuchtungsstärke.

3. Verfahren nach Anspruch 1 oder 2 unter Anwendungsbedingungen entsprechend Außenaufnahmen mit einer Beleuchtungsstärke vom Typ D65, und/ oder Innenaufnahmen mit einer Beleuchtungsstärke vom Typ A.

4. Verfahren nach irgendeinem der Ansprüche 1 bis 3, wonach man Bearbeitungsvorrichtungen an die Speichervorrichtungen anschließt, um die Darstellung des Lichtbildes wiederherzustellen, das auf der Bildebene empfangen wird, die das Bild filtern, um einem Spektralband eine Schärfe zuzuordnen, die in einem anderen Spektralband gemessen wird.

5. Verfahren nach einem der Ansprüche 1 bis 4, **dadurch gekennzeichnet, dass**

- bei einem Gegenstand, der in einem zweiten Abstandsbereich im Verhältnis zur Linse und mit einer inneren Beleuchtungsstärke aufgestellt ist, dieser Wert der Transferfunktion in den beiden Frequenzbändern höher ist, als jener, wenn dieses optische Element nicht dazwischengesetzt worden wäre.

6. Verfahren nach einem der Ansprüche 1 bis 5, **dadurch gekennzeichnet, dass**

- das optische Element eine Diffraktions-, eine Refraktions- oder eine Hybridmaske ist.

7. Verfahren nach einem der Ansprüche 1 bis 6, **dadurch gekennzeichnet, dass**

- das optische Element gegenüber einer Hauptebene des optischen Systems, zwischen dem Gegenstand und den Speichervorrichtungen angeordnet ist.

8. Verfahren nach einem der Ansprüche 1 bis 7, **dadurch gekennzeichnet, dass**

- das optische Element aus einer Dublette mit der Linse oder durch mehrere Refraktionslinsen aus Glas oder aus Kunststoff oder aus einem Material gebildet wird, das das Licht bricht.

9. Verfahren nach einem der Ansprüche 1 bis 8, **dadurch gekennzeichnet, dass**

- das optische Element gegenüber einer Bildebene einer Hauptebene des optischen Systems, zwischen dem Gegenstand und den Speichervorrichtungen angeordnet ist.

10. Verfahren nach einem der Ansprüche 1 bis 9, **dadurch gekennzeichnet, dass**

- die Speichervorrichtungen eine Ladungstransfervorrichtung, oder einen Film oder eine Videokamera umfassen.

11. Verfahren nach einem der Ansprüche 1 bis 10, **dadurch gekennzeichnet, dass**

   - die Bearbeitungsvorrichtungen einen digitalen Filter umfassen.

12. Verfahren nach einem der Ansprüche 1 bis 11, **dadurch gekennzeichnet, dass** die Brennweite für die kurzen Wellenlängen des gesamten Systems größer ist, als die Brennweite für die langen Wellenlängen.

Plan image

Flou maximum
acceptable ε

∞

F'

O'

O

Lentille

## Fig. 1a

Profondeur de
champ image

1    2

Plan image

ε'

∞

F

3

Lentille

1    2

4

Plan image

F

ε''

O

5    3

Lentille

## Fig. 1b

6

7

8    μP

10

9

**Fig. 2**

**Fig. 3**

Fig. 4

Fig. 5

**Fig. 6**

**Fig. 7**

Fig. 8

Fig. 9

Différence de marche introduite par l'objet diffractif

Position relative dans la pupille (mm)

# Fig. 10

# Fig. 11

**Fig. 12**

**Fig. 13**

**Fig. 14**

**Fig. 15**

**EP 2 191 322 B1**

## RÉFÉRENCES CITÉES DANS LA DESCRIPTION

**Documents brevets cités dans la description**

- FR 2880958 A